# EUROPEAN PATENT SPECIFICATION

(11) **EP 0 459 988 B1**
(45) Date of publication and mention of the grant of the patent: **11.08.1993**
(21) Application number: 90901698.2
(22) Date of filing: 02.01.1990
(51) Int. Cl.: B21C 37/15, B21D 5/10

(54) **METHOD FOR MANUFACTURING OF SQUARE PIPES FROM COATED STEEL STRIPS**
VERFAHREN ZUR HERSTELLUNG QUADRATISCHER RÖHREN AUS BESCHICHTETEN STAHLBÄNDERN
PROCEDE DE FABRICATION DE TUYAUX CARRES A PARTIR DE FEUILLARDS D'ACIER A SURFACE ENDUITE

(30) Priority: 03.01.1989 SE 8900014
(43) Date of publication of application: 11.12.1991
(73) Proprietor: AKV-ORTIC AB, S-714 00 Kopparberg (SE)
(72) Inventor: INGVARSSON, Lars, Ingvar, S-781 62 Borlänge (SE)
(74) Representative: Brinck, Curt Edvard
(86) International application number: SE9000001
(87) International publication number: WO9007392

(56) References cited:
- Patent Abstracts of Japan, vol 8, no. 50, M281, abstract of JP 58-205619, publ, 1983-11-30 (HITACHI ZOSEN K.K.)
- Patent Abstracts of Japan, vol 7, no. 227, M248, abstract of JP 58-119487 (KAWATETSU KENZAI KOGYO K.K.)
- Patent Abstracts of Japan, vol 8,no. 100, M295, abstract of JP 59-13513 (HITACHI ZOSEN K.K.)

## Description

It has been proved that thin-walled square pipes have become more and more used in e.g. frames for buildings, furniture and automobiles. The pipes can be either square or more or less rectangular in cross-section. Thin-walled pipes are defined as pipes with wall thicknesses up to 3 - 4 mm. Common lengths of course vary within wide limits, but regarding storing, transport and waste of course long initial pipes are preferred.

Conventionelly square pipes are manufactured by bending steel strips or steel plates. In a first step the strip or the plate is shaped mainly into a round pipe with a gap between the bended sides in the longitudinal direction of the pipe of about 2 - 3 times the plate thickness. This gap is filled up by welding, mostly by TIG-welding. This welding, where proportionately a lot of material shall be added to the thin surfaces of the seam, is very time-consuming and determines fully the highest speed for the manufacturing of the pipes. Of course the weld must be of a very god quality as the width of the jointing surfaces is not greater than the thickness of material of the pipe. After welding the round pipe it is shaped into a square pipe in a subsequent roller shaping. The greatest drawback with the conventional manufacturing however is that when welding, so high temperatures will be reached clone to the seams that eventual coating will be destroyed, either the coating consists of metals as e.g. zinc, aluminum, nickel or copper or blendings of these, or industrially painted surfaces. By industrially painted surfaces is usually ment surfaces coated by e.g. PVC-plastics, polyester or acrylate.

The coating on the outside of the pipes naturally can be repaired with a result which is more or less acceptable. But the reparation is devastating for the economy. On the contrary it has shown impossible to restore an acceptable preventing coating on the inner side of the pipe. Depending on the use of the pipes the inner sides can be exposed e.g. to air, more or less polluted and wet, or to agents flowing through, which destroy a pipe with a protection which is not satisfactory for the purpose. By that reson the application of the coating is postponed until after the welding when it frequently is carried out as dip-coating. This is an expensive and time-consuming process and the depth of the furnaces determine the maximum pipe length.

Another point of view of the manufacturing of square pipes is that from a storing and economical point of view it is desirable to start with a steel strip with a desired width, thickness and coating by slitting from wider plate rolls with a thickness and a coating corresponding to the finished pipe and after that subsequently shape and join the pipe and cut it into desired lengths and even carry out some after-treatment.

Surprisingly it has appeared that square pipes can be continuously manufactured from steel strips, e.g. slitted from wide coils with a desired thickness and a completely treated surface by broadening the surfaces of the joint, having engaging coatings to melt together after a quick heating by help of a laser heater and on the name time providing the pipe with such stresses that a durable joint is reached and where the coating in the area of the joint keeps its protecting and visible effect without considerable affection.

The invention will be described more precisely in the enclosed claims, in a more detailed description below and by help of drawings enclosed on which:
figure 1 shows a square pipe in a perspective projection and
figure 2 a cross-section of the continuously manufactured pipe section at the moment in which the laser heating is started.

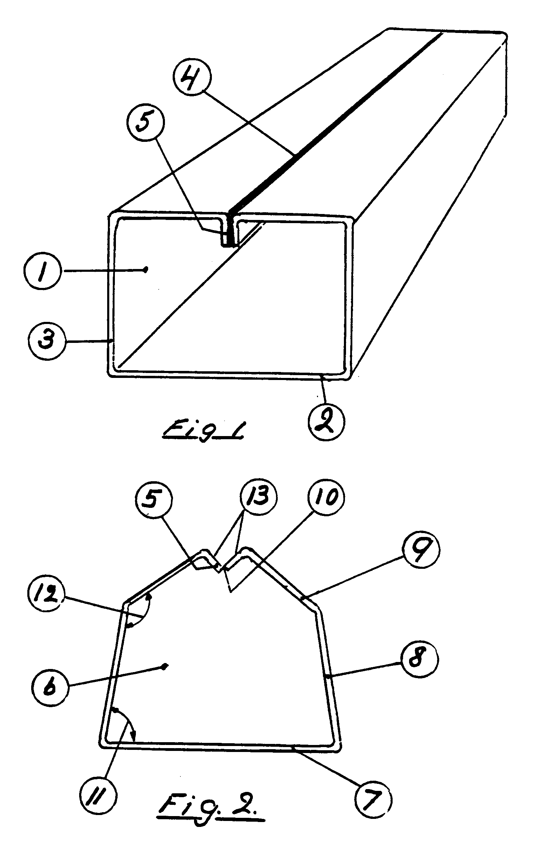

When manufacturing of a square pipe 1, a start is made from a steel strip with a thickness equal to the thickness of the finished pipe 1. The width is equal to the periphery of the pipe 1, to which an addition is made for the two foldings 5 (see below). After that the strip is bent in a continuous roller shaping path constituted by a number of facing roller couples arranged in groups after each other making the strip symmetrically shaped into a determined cross-section of the pipe 1. In order to be able to heat coated surfaces 13, which are to be melted together by laser heating and to build in stresses in the finished pipe 1 making the joint 4 to close at e.g. bending stresses in the pipe 1, a determined profile 6 is shaped. The width of the bottom part 7 of the profile 6 is made equal to the bottom 2 of the pipe 1, the side parts 8 of the profile 6 equal to the sides 3 of the pipe 1 and the top parts 9 of the profile 6 equal to half the width of the bottom 2 of the pipe 1. The angles 11 of the bottom of the profile 6, i.e. the angles between the bottom part 7 of the profile 6 and the side parts 8, are made acute down to 70° and the angles 12 of the top parts of the profile 6, i.e. the angles between the side parts 8 of the profile 6 and top parts 9, are made obtuse and mainly as much over 90° as the bottom angles 11 are below 90°. However the lower edges 10 of the foldings 5 have to contact each other. The foldings 5 ends the top parts 9 of the profile 6 and are bended in a right angle (90°) from the name. The width of the foldings 5 is adjusted making a sufficiant jointing surface at melting of the two coatings of their each other facing, coated surfaces 13. When said profile 6 is reached during the continuous shaping in the roller shaping device said coated surfaces 13 are heated into melting or at least into a plastic consistency by help of a laser beam directed to the foldings 5. By help of laser the heating is very quickly made and the heating can be concentrated to exactly the areas which are to be heated. After a desired concistency successively is reached on the heated coated surfaces 13 the shaping of the profile 6 into a square pipe 1 is carried on in the roller shaping device. This shaping mainly is to change the obtuse angles 12 of the upper parts of the profile 6 into right angles by depressing the upper parts 9 of the profile 6 to the center of the pipe and with an over-bending of the angles 12 of the upper parts of the profile 6 in a way that these after springing back become right. If the method is uniformed controlled the bottom angles 11 of the profile 6 also will be 90°. But at this method no over-bending is made of these angles but a certain spring back force is reached striving to press the melted surfaces of the foldings 5 together, which strengthens the jointing force of the joint 4. This is especially useful if the square pipe 1 is subjected to such bending stresses where tensile forces arise in the upper side of the jointed square pipe 1.

## Claims

1. A method for manufacturing of thin-walled, square pipes (1) of coated steel strips in a continuous process, **characterized** in that the cross-section of the strip successively and symmetrically is shaped between roller couples into a flat bottom part (7) equal to the desired width of the pipe, which by lower corners with acute bottom angles (11), is leading into flat side parts (8) equal to the sides of the pipe (1) and these in its turn leading into top parts (9) by obtuse top part angles (12), the width of which is equal to half of the width of the pipe and each ending with flat foldings (5) in angles of 90° to the top parts (9) and that the bottom angles (11) and the top part angles (12) at the profile are dimensioned that the lower edges (10) of the foldings (5) contacts, that the coated surfaces (13) of the foldings (5) facing each other are successively heated by laser beating into a temperature at which their coatings are melting together at the following compression when at the same time the shape of the pipe (1) is completed.

2. A method for manufacturing of square pipes (1) according to claim 1, **characterized** in that the steel strips are coated with a metallic coating mainly consisting of zinc or aluminum or mixtures of these.

3. A method for manufacturing of square pipes (1) according to claim 1 or 2, **characterized** in that the steel strips are Industrially painted.

## Patentansprüche

1. Verfahren zur Herstellung von dünnwandigen, quadratischen Röhren (1) aus beschichteten Stahlbändern in einem kontinuierlichen Prozeß, dadurch **gekennzeichnet**, daß der Querschnitt des Bandes zwischen Rollenpaaren schrittweise und symmetrisch zu einem ebenen Bodenteil (7) geformt wird, das die gleiche Breite hat wie die erwünschte Breite der Röhre, wobei die Seiten des Bandes an unteren Ecken über spitze Bodenwinkel (11) in ebene Seitenteile (8) überleiten, die den Seiten der Röhre (1) gleich sind und wobei diese wiederum über stumpfe Oberteilwinkel (12) in Oberteile (9) überleiten, deren Breite gleich der Hälfte der Breite der Röhre ist und von denen jedes in einer flachen Falzung (5) endet, die in einen Winkel von 90° von den Oberteilen (9) abstehen,
daß die Bodenwinkel (11) und die Oberteilwinkel (12) am Profil (6) so bemessen sind, daß die unteren Kanten (10) der Falzungen (5) sich berühren, und
daß die beschichteten Oberflächen (13) der Falzungen (5), die einander gegenüberliegen, mit Hilfe einer Lasereinrichtung auf eine Temperatur erwärmt werden, bei der deren Beschichtungen zusammen mit dem nachfolgenden Zusammendrücken dann verschmolzen werden, wenn die Form der Röhre (1) gleichzeitig vollendet wird.

2. Verfahren zur Herstellung quadratischer Röhren (1) nach Anspruch (1), dadurch gekennzeichnet, daß die Stahlbänder mit einer metallischen Beschichtung beschichtet sind, die im wesentlichen aus Zink oder Aluminium oder aus Mischungen dieser Metalle besteht.

3. Verfahren zur Herstellung quadratischer Röhren (1) nach den Ansprüchen 1 oder 2, dadurch gekennzeichnet, daß die Stahlbänder industriell beschichtet sind.

## Revendications

1. Procédé de fabrication de tuyaux carrés (1) à paroi mince en feuillards d'acier enduit, dans un processus continu, caractérisé en ce que la section transversale du feuillard est successivement et symétriquement configurée entre des paires de rouleaux en une partie (7) à fond plat égale à la largeur souhaitée du tuyau, qui par des coins inférieurs avec des angles aigus (11),mène à des parties latérales plates (8) égales aux côtés du tuyau (1) et celles-ci à leur tour mènent à des parties supérieures (9) par des angles obtus (12) des parties supérieures, dont la largeur est égale à la moitié de la largeur du tuyau et chacune des parties supérieures se termine par des pliages plats (5) à des angles de 90° par rapport aux parties supérieures (9) et en ce que les angles du fond (11) et les angles des parties supérieures (12) au profilé (6) sont dimensionnés de manière que les bords inférieurs (10) des pliages (5) se contactent, que les surfaces enduites (13) des pliages (5) se faisant face, soient successivement chauffées par un chauffage au laser à une température à laquelle les revêtements fondent à la compression suivante lorsqu'en même temps est obtenue la forme du tuyau (1).

2. Procédé pour la fabrication de tuyaux carrés (1) selon la revendication 1, caractérisé en ce que les feuillards d'acier sont enduits d'un revêtement métallique consistant principalement en zinc ou aluminium ou mélanges de ceux-ci.

3. Procédé pour la fabrication de tuyaux carrés (1) selon la revendication 1 ou 2, caractérisé en ce que les feuillards d'acier sont industriellement peints.
